# EUROPÄISCHE PATENTSCHRIFT

(11) **EP 3 871 322 B1**
(45) Veröffentlichungstag und Bekanntmachung des Hinweises auf die Patenterteilung: **05.10.2022**
(21) Anmeldenummer: 19808683.7
(22) Anmeldetag: 04.10.2019
(51) Int. Cl.: H02K 7/18

(54) **VORRICHTUNG ZUR ENERGIEGEWINNUNG ZUR VERWENDUNG AN EINER TÜR ODER EINEM FENSTER SOWIE SENSOR**
DEVICE FOR ENERGY HARVESTING FOR USE ON A DOOR OR WINDOW AND SENSOR
DISPOSITIF DE RÉCUPÉRATION D'ÉNERGIE À UTILISER SUR UNE PORTE OU UNE FENÊTRE ET UN CAPTEUR

(30) Priorität: 25.10.2018 DE 102018126690
(43) Veröffentlichungstag der Anmeldung: 01.09.2021
(73) Patentinhaber: Hochschule für Technik und Wirtschaft Berlin, 10318 Berlin (DE); Würth Elektronik eiSos GmbH & Co. KG EMC & Inductive Solutions, 74638 Waldenburg (DE)
(72) Erfinder: BICKEL, Jan, 12487 Berlin (DE); AL-BATOL, Muaadh, 10315 Berlin (DE); NGO, Ha Duong, 10247 Berlin (DE); MÜLLER, Hans-Heinz, 15711 Königs Wusterhausen (DE); DINULOVIC, Dragan, 81735 München (DE); HAUG, Martin, 81377 München (DE)
(74) Vertreter: Weidner Stern Jeschke
(86) Internationale Anmeldenummer: PCT/DE2019/200115
(87) Internationale Veröffentlichungsnummer: WO 2020/083447

(56) Entgegenhaltungen:
- EP-A1- 1 713 166
- GB-A- 110 700
- US-A1- 2009 273 322

## Beschreibung

Die Erfindung betrifft eine Vorrichtung zur Energiegewinnung zur Verwendung an einer Tür oder einem Fenster sowie einen Sensor zur Detektion eines Öffnungs- oder Schließvorganges eines Fensters oder einer Tür sowie einen Sensor.

Im Stand der Technik ist das Energy Harvesting bekannt, welches wörtlich übersetzt Energie-Ernten bedeutet. Hierunter wird die Gewinnung kleiner Mengen von elektrischer Energie aus Quellen wie Umgebungstemperatur, Vibrationen oder Luftströmungen für mobile Geräte mit geringer Leistung verstanden. Die dafür eingesetzten Strukturen, welche Energyharvester oder auch als Nanogenerator bezeichnet werden, vermeiden bei Drahtlostechnologien Einschränkungen durch kabelgebundene Stromversorgung oder Batterien. Das Energy Harvesting hat eine Bedeutung für die Energieversorgung von Miniaturgeräten in der digitalen Welt und versucht im Hinblick auf das Internet der Dinge kleine Sensoren, welche in den genannten Dingen vorhanden sind, von einer externen Stromversorgung unabhängig zu machen.

Das Energy Harvesting kann beispielsweise mithilfe von Mikroeffekte bewerkstelligt werden. Hierzu können unter anderem folgende Effekte oder Techniken verwendet werden: Piezoelektrizität, Thermoelektrizität, Pyroelektrizität, Nutzung von Energie von elektromagnetischen Wellen (z.B. passive RFIDs oder Umgebungslicht), Photovoltaik sowie Osmose. Ferner können Makroeffekte verwendet werden, bei denen die Energieerzeugung mechanisch mit oder ohne Induktion erfolgt.

Aus der GB 110 700 A ist eine durch Daumendruck betriebene elektrische Taschenlampe bekannt, bei der eine Spannung zum Betreiben der Lampe mittels eines kleinen Kurbelinduktors oder eines Dynamos aufgrund einer kontinuierlichen Rotation angetrieben von einer doppelten Zahnradstange erzeugt wird.

Die US 2011/0 252 845 A1 offenbart eine Vorrichtung zur elektrischen Türentriegelung mit einem piezoelektrischen Energieharvester, welcher rotierbar über Zahnräder mit einem Türscharnier verbunden ist.

In der US 2009/0 273 322 A1 ist eine elektrische Generatoranordnung mit einem Stator und einem Rotor an einer Tür beschrieben, welche rotierend an der Türangel angeordnet ist.

Die DE 32 08 818 A1 offenbart einen Generator, welcher den Ladestrom für einen Spannungsspeicher eines elektrischen Schlosses erzeugt, wobei das Antriebsritzel des dynamoelektrischen Generators mit einem feststehenden Zahnsegment eine Türangel kämmt.

Die US 2009/0 140 858 A1 beschriebt ein Statusüberwachungsgerät für eine Fenstereinheit, welches Informationen an eine Informationssammeleinheit über einen Statuscodeempfänger übertragen kann, und eine interne Energiequelle, wie eine Batterie und/oder eine piezoelektrische oder andersartige Energiegewinnungsquelle aufweist.

Die WO 2016/007 357 A1 offenbart ein Ladegerät für die Verwendung an einer Tür, wobei das Ladegerät die kinetische Energie einer linearen Bewegung der Tür in elektromotorische Kraft zum Aufladen einer angeschlossenen wiederaufladbaren Energiequelle nutzt, wobei letztere zur Versorgung von Sensoren der Tür, wie Überwachungssensoren oder Sendern, verwendet werden kann.

In EP 1 713 166 A1 ist ein strombetriebener Schrittmotor beschrieben, bei dem ein Rotor ausgebildet als Magnet um einen Rotationsschaft angeordnet und von zwei Spulen mit äußeren Magnetpolteilen umgeben ist, wobei der Magnet in abwechselnd mit Süd- und Nordpol magnetisierte Sektionen unterteilt ist.

Aufgabe der Erfindung ist es, den Stand der Technik zu verbessern.

Gelöst wird die Aufgabe durch eine Vorrichtung gemäß Anspruch 1 und insbesondere durch eine Vorrichtung zur Energiegewinnung zur Verwendung an einer Tür oder an einem Fenster, aufweisend: ein verschiebbares Betätigungselement; welches mit der Tür oder dem Fenster koppelbar ist; mindestens ein mit dem Betätigungselement mechanisch gekoppeltes Zahnrad, wobei jedes Zahnrad mindestens einen Permanentmagneten aufweist oder mit einem Permanentmagneten gekoppelt ist; und mindestens eine Spule, wobei die Vorrichtung für jedes Zahnrad mindestens eine diesem Zahnrad zugeordnete Spule aufweist; wobei das Betätigungselement und das mindestens eine Zahnrad derart gekoppelt sind, dass bei einer Verschiebung des Betätigungselements das mindestens eine Zahnrad um eine jeweilige Rotationsachse rotiert wird; und wobei bei einer Rotation des mindestens einen Zahnrads um die jeweilige Rotationsachse in der mindestens einen Spule eine Spannung induziert wird, sodass eine Energie gewonnen wird, wobei das Zahnrad einen Permanentmagneten aufweist, welcher jeweils sektorförmig auf einer Fläche magnetisiert ist das Zahnrad jeweils eine Platte oder eine Scheibe mit sektorförmig angeordneten Spulen aufweist, wobei die Platte oder die Scheibe mit dem dazugehörigen Zahnrad koaxial angeordnet ist.

Hierbei wird die Spannung induziert, da mit der Rotation eines jedes Zahnrads um die jeweilige Rotationsachse eine Rotation des mindestens einen Permanentmagneten verbunden ist, so dass dieser gegenüber der Spule bewegt wird.

Somit kann eine an einer Tür oder an einem Fenster anzuordnende Vorrichtung bereitgestellt werden, welche durch einen Öffnungs- oder Schließvorgang der Türe oder des Fensters Energie gewinnt, welche zum Betrieb einer elektronischen Vorrichtung verwendet werden kann. Diese elektronische Vorrichtung kann zum Beispiel ein Sensor sein, welcher einen Öffnungs- oder Schließvorgang des Fensters oder der Tür detektiert.

Folgendes Begriffliche sei erläutert:
Unter "Energiegewinnung" wird im Rahmen dieser Erfindung insbesondere das Energy Harvesting verstanden. Dabei wird insbesondere elektrische Energie gewonnen.

Im Rahmen der vorliegenden Erfindung versteht der Fachmann, dass die vorliegende Vorrichtung zur Energiegewinnung neben Türen oder Fenstern auch an anderen Vorrichtungen verwendet werden kann, welche geöffnet oder geschlossen werden können und an denen ein Betätigungselement befestigt werden kann, zum Beispiel Klappen und der Gleichen.

Unter einer Verschiebbarkeit des Betätigungselement wird verstanden, dass das Betätigungselement und ein Fenster oder eine Tür derart miteinander gekoppelt sind, dass ein Öffnungs- oder Schließvorgang der Türe oder des Fensters das Betätigungselement verschiebt, bevorzugt linear verschiebt, sodass das mindestens eine mit dem Betätigungselement mechanisch gekoppelte Zahnrad betätig wird.

Unter einem "Betätigungselement" wird vorliegend ein Element verstanden, welches durch einen Öffnungs- oder Schließvorgang einer Tür oder eines Fensters betätigt, d. h. verschoben werden kann. Dies kann insbesondere eine Stange, ein Knopf, eine Leiste oder eine andere mechanische Vorrichtung sein, welche eine Verschiebebewegung, insbesondere eine lineare Verschiebebewegung, im Raum vermitteln kann.

Unter einer mechanischen Kopplung des Betätigungselement mit einem Zahnrad wird jede mechanische Kopplung verstanden, welche derart wirkt, dass eine Verschiebung, insbesondere lineare Verschiebung, des Betätigungselements bewirkt und dass das Zahnrad um die jeweilige Rotationsachse oder seine Lagerachse gedreht wird, sodass eine Rotation vorliegt. Dies kann zum Beispiel durch einen Zahnstangenantrieb realisiert werden, wobei das Betätigungselement Zähne einer Zahnstange aufweist, welche in die Zähne des Zahnrads eingreifen. Alternativ kann dies realisiert werden durch ein Eingriffselement, z.B. einen Dorn oder einen Zahn, welcher an der Stange befestigt ist, wobei der Dorn oder Zahn im Wesentlichen orthogonal zur Verschieberichtung des Betätigungselement angeordnet ist und wobei bei der Verschiebung des Betätigungselements der Dorn oder Zahn in einen Zahn des Zahnrads eingreift, wodurch das Zahnrad so lange gedreht wird, bis der Dorn oder Zahn des Betätigungselement nicht mehr mit dem Zahnrad in Eingriff ist.

Unter einer Kopplung eines Zahnrads mit einem Permanentmagneten wird jede mechanische Kopplung verstanden, welche so wirkt, dass eine Drehung des Zahnrades um einen vorgegebenen Winkel eine Drehung des Permanentmagneten um denselben Winkel bewirkt. Hierzu sind der Permanentmagnet und das Zahnrad bevorzugt koaxial ausgerichtet. Es ist weiter bevorzugt, dass der Permanentmagnet innerhalb eines Zahnrades angeordnet ist.

Der mindestens eine Permanentmagnet ist bevorzugt an einer Ober- oder Unterseite des Zahnrads angeordnet.

Unter "Spulen" werden in der Elektrotechnik einerseits Wicklungen und Wickelgüter verstanden, die geeignet sind, ein Magnetfeld zu erzeugen oder zu detektieren. Sie sind elektrische Bauelemente oder sind Teile eines Gerätes, wie beispielsweise eines Transformators, Relais, Elektromotors oder Lautsprechers. Eine Spule kann z.B. eine PCB(engl.: printed circuit board)-Spule sein.

Falls die Anzahl der Zahnräder mehr als zwei beträgt, kann ein vorgegebenes Zahnrad durch die Kopplung mit dem Betätigungselement in eine vorgegebene Drehrichtung gedreht werden, und ein anderes Zahnrad durch die Kopplung gemäß einer Ausführungsform in dieselbe Richtung und gemäß einer anderen Ausführungsform in eine entgegengesetzte Richtung gedreht werden.

Ein Kern der Erfindung beruht somit darauf, dass die Bewegungsenergie, welche in der Bewegungsenergie eines Öffnungs- oder Schließvorgangs einer Tür oder eines Fensters vorhanden ist, mithilfe von Induktion in einer Spule elektrische Energie mittels Induktion gewonnen wird, welche zum Betrieb eines elektrischen Geräts, insbesondere eines Funkmoduls, verwendet wird. Die Spannungsinduktion in eine in der Vorrichtung vorhandenen Spule folgt dadurch, dass der Öffnungs- oder Schließvorgang der Türe oder des Fensters ein Betätigungselement verschiebt, so dass durch eine mechanische Kopplung mindestens ein ein Permanentmagnet aufweisendes Zahnrad über die Spule bewegt wird.

Das Betätigungselement kann mit der Tür oder dem Fenster so gekoppelt sein, dass das Betätigungselement in einem geöffneten Zustand der Türe oder des Fensters in einer ersten Position angeordnet ist und in einem geschlossenen Zustand der Türe oder des Fensters in einer zweiten Position angeordnet ist. Dies stellt eine einfache Art und Weise dar, wie das Betätigungselement mit einer Tür oder einem Fenster gekoppelt werden kann.

Das Betätigungselement kann in dem geschlossenen Zustand der Türe oder des Fensters gegenüber einer Feder verspannt sein. Hierdurch wird erreicht, dass bei einem Öffnen der Türe oder des Fensters das Betätigungselement einfach und komfortabel mithilfe der Federkraft von der zweiten Position in die erste Position zurückbewegt wird. Hierbei kann die Feder in einem geöffneten Zustand der Türe oder des Fensters nicht verspannt, d. h. kraftfrei sein. Ferner kann die Feder eine Druckfeder sein.

Die durch die Induktion erzeugte Spannung kann verwendet werden, um ein Funkmodul, einen Mikroprozessor, einen Mikrocontroller, einen Gleichrichter, einen DC-DC-Wandler oder ein anderes elektrisches Gerät zu versorgen. Andere denkbare elektronische Vorrichtungen, welche an einem Fenster oder an einer Tür angeordnet sein können, sind zum Beispiel Temperatur-, Luft- oder Feuchtigkeitssensoren. Dieses Merkmal hat unter anderem den Vorteil, dass die Vorrichtung keine interne oder externe Stromversorgung benötigt.

Die Anzahl der Zahnräder, welche mit dem Betätigungselement mechanisch gekoppelt sind, beträgt bevorzugt zwei. Ferner weist ein Zahnrad bevorzugt einen Permanentmagneten auf, welcher bevorzugt 8 oder 16 Pole aufweist. Alternativ kann ein Zahnrad zwei oder mehrere Permanentmagneten aufweisen. Es ist ferner bevorzugt, dass die Vorrichtung eine Vielzahl von Spulen aufweist, welche bevorzugt unterhalb oder oberhalb der Pole der Permanentmagneten angeordnet sind.

Um eine platzsparende Anordnung zu realisieren, weist jedes Zahnrad einen insbesondere ringförmigen Permanentmagneten auf, welcher jeweils sektorförmig auf einer Fläche magnetisiert ist. Ein solcher Permanentmagnet hat die Form einer Scheibe oder eines Ringes, deren oder dessen Sektoren unterschiedliche Pole der Magnetisierung aufweisen. Hierbei kann eine Rotationsachse der Scheibe oder des Ringes koaxial mit der Rotationsachse des Zahnrades sein. Hierbei kann der Permanentmagnet mehr als zwei Pole, bevorzugt 8, 16 oder 32 Pole aufweisen.

Um die induzierte Spannung bestmöglich auszunutzen, ist für jedes Zahnrad jeweils eine Scheibe mit sektorförmig angeordneten Spulen vorhanden, wobei jede Scheibe mit dem dazugehörigen Zahnrad koaxial angeordnet ist. Hierbei ist ein Abstand der Spulen der Scheibe zu den Permanentmagneten das Zahnrads möglichst klein zu wählen, damit die induzierte Spannung möglichst groß ist. Hierbei ist es bevorzugt, dass die Anzahl der Spulen pro Scheibe größer oder gleich der Anzahl der Pole des Permanentmagneten ist. In Abhängigkeit der erwarteten Drehschwingung der Zahnräder kann die Anzahl der Spulen so gewählt werden, dass mindestens ein Pol jedes Permanentmagneten über mindestens einer Spule bewegt wird. Dies stellt ein Mindestmaß an Induktion sicher.

Mindestens ein Zahnrad des mindestens einen Zahnrades kann mithilfe einer Schenkelfeder an einem Gehäuse der Vorrichtung befestigt sein. Bevorzugt sind alle Zahnräder mithilfe jeweils einer Schenkelfeder an dem Gehäuse der Vorrichtung befestigt. Hierdurch kann vorteilhafterweise erreicht werden, dass bei einem Öffnungs- oder Schließvorgang der Tür oder des Fensters durch die Bewegung des Betätigungselement die Zahnräder zu einer Drehschwingung angeregt werden, dies kann wiederum bewirken, dass eine Energieausbeute des Energyharvesters erhöht wird. Bevorzugt beträgt der Winkel zwischen den beiden Schenkeln der Schenkelfeder 90°.

Hierbei kann gemäß einer weiteren Ausführungsform das Betätigungselement mindestens ein Eingriffselement aufweisen, welches jeweils so ausgeführt und eingerichtet ist, dass bei einem Verschieben des jeweiligen Betätigungselements von der ersten Position zur zweiten Position oder von der zweiten Position zur ersten Position das jeweilige Eingriffselement in das jeweilige Zahnrad eingreift, das jeweilige Zahnrad dreht, wodurch die jeweilige Schenkelfeder gespannt wird, bis das jeweilige Eingriffselement nicht mehr in das jeweilige Zahnrad eingreift, woraufhin die jeweilige Schenkelfeder das jeweilige Zahnrad in eine entgegengesetzte Richtung so bewegt, sodass es zu einer Drehschwingung des jeweiligen Zahnrades kommt.

Wenn man ohne Einschränkung der Allgemeinheit eine Schenkelfeder betrachtet, deren Schenkeln einen Winkel von 90° einschließen, so versteht man unter einem Spannen der Schenkelfeder sowohl eine Bewegung der beiden Schenkel, welche den Winkel erhöht als auch eine Bewegung, welche den Winkel verkleinert.

Ein Drehwinkel der oben genannten Drehschwingung des jeweiligen Zahnrades kann zwischen 60° und 360° liegen. Da die Drehschwingung naturgemäß gedämpft ist, ist zu klären, was unter dem Drehwinkel verstanden wird. Der Drehwinkel ist der Winkel zwischen derjenigen Stellung des Zahnrades, zu der die Schenkelfeder maximal gespannt ist, und derjenigen Stellung des Zahnrades, zu der die Schenkelfeder in die entgegengesetzte Richtung maximal gespannt ist. Zeitlich nach diesen beiden Stellungen des Zahnrades werden aufgrund der Dämpfung der Drehschwingung die nachfolgenden Stellungen des Zahnrades einer geringeren Spannung der Schenkelfeder entsprechen. Mit den oben genannten Werten des Drehwinkels kann mit einem Permanentmagneten, welcher eine handelsübliche Polanzahl, z.B. 16, aufweist, und einer Spulenanzahl pro Scheibe von z.B. 8, erreicht werden, dass mindestens eine Spule über einen gesamten Pol bewegt wird. Hierdurch wird ein Mindestmaß an elektromagnetischer Induktion sichergestellt.

Die Vorrichtung kann ferner aufweisen: ein Zahnradelement mit einem ersten zusätzlichen Zahnrad und einem zweiten zusätzlichen Zahnrad, wobei das zweite zusätzliche Zahnrad des Zahnradelements und das Zähne aufweisende Betätigungselement so miteinander gekoppelt sind, dass diese einen Zahnstangenantrieb realisieren, wobei das erste zusätzliche Zahnrad des Zahnradelements, insbesondere an gegenüber liegenden Enden des ersten Zahnrades, mit dem mindestens einen Zahnrad in Eingriff steht, wobei der Radius des ersten zusätzlichen Zahnrad größer als der Radius desjenigen Zahnrades ist, welches das größte des mindestens einen Zahnrads ist. Hierdurch kann eine hohe Übersetzung zwischen dem ersten zusätzlichen Zahnrad des Zahnradelements und dem mindestens einen Zahnrad erreicht werden, sodass sich bei gleichbleibender Bewegungsstrecke des Betätigungselements die Anzahl der Umdrehungen des mindestens einen Zahnrads erhöht, was zu einer erhöhten Induktion führt. Bevorzugt ist das Übersetzungsverhältnis größer als 2, bevorzugt größer als 3.

Jedes Zahnrad kann genau einen Permanentmagneten aufweisen und mindestens ein Zahnrad, bevorzugt alle Zahnräder, des mindestens einen Zahnrads kann mit dem dazugehörigen Permanentmagneten mittels eines Freilaufs gekoppelt sein. Unter einem Freilauf, welcher auch Überholkupplung genannt wird, wird eine nur in einer Drehrichtung wirkende Kupplung verstanden. Hierbei ist es bevorzugt, dass die Anzahl des mindestens einen Zahnrads zwei beträgt. In diesem Fall wirkt der Freilauf eines vorgegebenen Zahnrades entgegengesetzt zum Freilauf des entsprechenden anderen Zahnrades. Gemäß weiteren Ausführungsformen ist es bevorzugt, dass die Scheiben, auf denen die Permanentmagneten angeordnet sind, mit einem Lager geringer Reibung gelagert sind, zum Beispiel einem Gleitlager. Dies bewirkt, dass bei Betätigung des Betätigungselements zunächst die Zahnräder angetrieben werden und dann diejenigen Scheiben getrieben werden, welche mit dem Freilauf gekoppelt sind. Da diese Scheiben mit geringer Reibung gelagert sind, werden diese eine hohe Anzahl von Umdrehungen vollführen bis sie zum Stillstand kommen. Hierdurch wird die Energieausbeute erhöht.

In einem weiteren Aspekt wird die Aufgabe gelöst durch einen Sensor zur Detektion eines Öffnungs- oder Schließvorganges eines Fensters oder einer Tür. Der Sensor weist eine oben beschriebene Vorrichtung zur Energiegewinnung auf und ist dadurch gekennzeichnet, dass die Vorrichtung eingerichtet und ausgeführt ist, dass die Energie, welche bei einem Betätigen des Betätigungselements gewonnen wird, dazu verwendet wird, ein Funksignal zu erzeugen, welches einen Öffnungs- oder Schließvorgang des Fensters oder der Tür anzeigt.

Bevorzugt wird eine Position des Betätigungselements justiert, d. h. dem System wird in einem internen Speicher vorgegeben, ob die Tür oder das Fenster geöffnet oder geschlossen ist. Gemäß dieser Ausführungsform kann nicht erkannt werden, ob sich das Betätigungselement in der ersten oder der zweiten Stellung befindet. Falls das Betätigungselement dann betätigt wird, und ein elektrischer Puls erzeugt werden kann, wird ein Funksignal erzeugt, dass sich der Zustand der Türe oder des Fensters geändert hat.

Gemäß einer anderen Ausführungsform kann anhand der induzierten Spannung erkannt werden, ob sich das Betätigungselement öffnet oder schließt. Alternativ oder zusätzlich kann ein Positionssensor die erste oder zweite Stellung des Betätigungselements detektieren.

Bevorzugt kann die durch die Induktion erzeugte Energie in einem Energiespeicher, zum Beispiel einem Kondensator oder einem Akku gespeichert werden.

Im Weiteren wird die Erfindung anhand von Ausführungsbeispielen erläutert. Es zeigen
- Figur 1: eine schematische dreidimensionale Darstellung einer ersten Ausführungsform einer Vorrichtung zur Energiegewinnung zur Verwendung an einer Tür oder einem Fenster;
- Figur 2: eine schematische Vorderansicht der Vorrichtung zur Energiegewinnung der Figur 1;
- Figur 3: eine schematische Darstellung eines Zahnrads mit Permanentmagneten sowie einer Scheibe mit PCB-Spulen wie sie in der Ausführungsform der Figur 1 oder Figur 2 verwendet wird und
- Figur 4: eine schematische dreidimensionale Darstellung einer zweiten Ausführungsform einer Vorrichtung zur Energiegewinnung zur Verwendung an einer Tür oder einem Fenster.

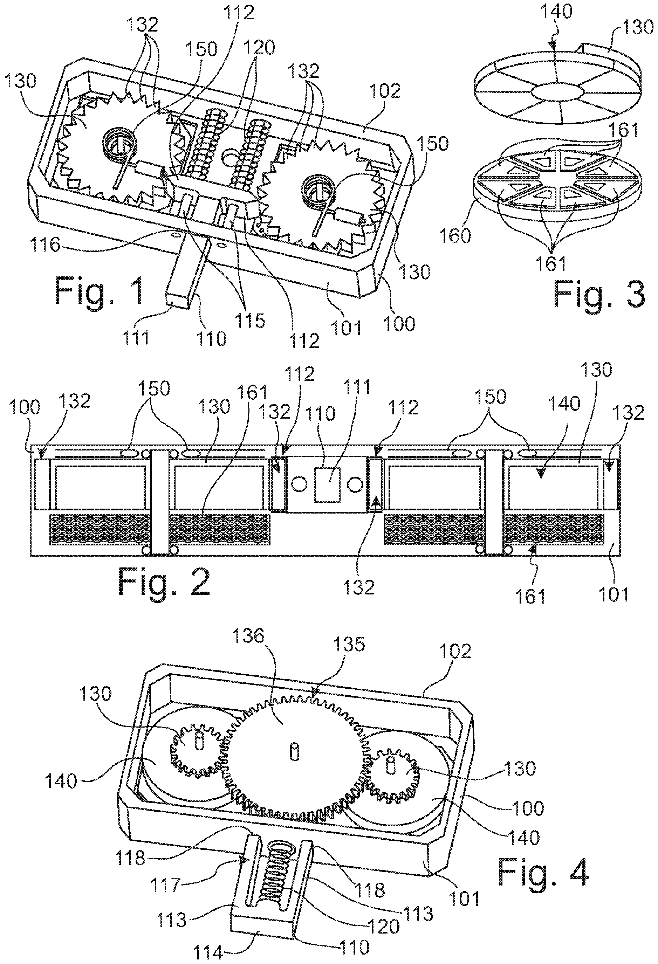

Die erste Ausführungsform der Vorrichtung zur Energiegewinnung zur Verwendung an einer Tür oder einem Fenster ist in einem Gehäuse 100 angeordnet (Fig. 1). Hierbei ist ein linear verschiebbares Betätigungselement 110 mithilfe von zwei Stäben 115 sowie zwei Druckfedern 120 im Inneren des Gehäuses 100 gelagert. Das Betätigungselement 110 hat die Form eines Hammers und weist somit einen Stiel 111 sowie zwei senkrecht zum Stiel 111 verlaufende Eingriffselemente 112 auf, welche jeweils am äußersten seitlichen Ende zahnförmig ausgestaltet sind.

Die zwei parallel verlaufende Stäbe 115 sind symmetrisch zu einer Mittelebene des Gehäuses 100 angeordnet und sind jeweils an gegenüberliegenden Seitenwänden 101, 102 des Gehäuses 100 befestigt. Diese Mittelebene steht senkrecht auf der ersten Seitenwand 101 und der zweiten Seitenwand 102 des Gehäuses 100 und verläuft senkrecht zu einer Ebene, welche durch die beiden Stäbe 115 verläuft.

Die beiden Eingriffselemente 112 weisen jeweils eine Bohrung auf, durch die die beiden Stäbe 115 verlaufen. Der Stiel 111 des Betätigungselements 110 verläuft durch ein Loch 116 in einer ersten Seitenwand 101 des Gehäuses 100. Sowohl die Führung des Stiels 111 im Loch 116 als auch die Führungen der Stäbe 115 in den Eingriffselemente 112 das Betätigungselement verlaufen horizontal in einer Ebene des Gehäuses 100 und bewirken, dass das Betätigungselement 110 horizontal linear verschiebbar ist.

Bei geöffneter Tür oder bei geöffnetem Fenster befindet sich das Betätigungselement 110 in einer ersten Position, in welcher sich die beiden Druckfedern 120 in einem nicht zusammengedrückten Zustand befinden. In diesem Zustand befindet sich der Stiel 111 und das Betätigungselement 110 zum größten Teil außerhalb des Gehäuses 100. Falls der Stiel 111 des Betätigungselements 110 durch ein Schließen der Tür oder des Fensters mit einem Teil der Türe oder des Fensters in Richtung des Inneren des Gehäuses 100 gedrückt wird, werden die Druckfeder 120 zusammengedrückt. Falls die Tür oder das Fenster geschlossen ist, ist das äußere Ende des Stiels 111 bündig mit einer äußeren Oberfläche der ersten Seitenwand 101 des Gehäuses 100. In diesem Zustand befindet sich das Betätigungselement 110 in einer zweiten Position.

Bei Betätigung des Betätigungselements 110 greifen die Eingriffselemente 112 in Zähne 132 der beiden Zahnräder 130 (Fig. 1 und 2). Die beiden Zahnräder 130 sind symmetrisch zur oben genannten Mittelebene angeordnet und sind jeweils im Gehäuse drehbar gelagert. Jedes Zahnrad 130 weist einen Permanentmagneten 140 auf, welcher jeweils sektorförmig auf einer Fläche mit 8 Polen magnetisiert ist (Fig. 3). Hierbei ist jedes Zahnrad 130 im Wesentlichen scheibenförmig und oberhalb des entsprechenden Permanentmagneten 140 angeordnet, welcher ebenfalls scheibenförmig ist. Hierbei sind die Radien der Scheiben des Permanentmagneten 140 und des jeweiligen Zahnrads 130 gleich groß.

An den Zahnrädern 130 sind jeweils Schenkelfedern 150 befestigt (Fig. 1). Jeweils ein Ende der Schenkelfedern 150 ist an einem Deckel des Gehäuses 100 befestigt. Das jeweils andere Ende der Schenkelfedern 150 ist an einer Oberseite der Zahnräder 130 befestigt.

Unterhalb jedes Permanentmagneten 140 ist jeweils eine Scheibe 160 angeordnet, auf welcher jeweils eine Vielzahl von sektorförmig angeordneten Spulen 161 aufgebracht ist (Fig. 3). Die Anzahl der Spulen 161 pro Scheibe 160 beträgt vorliegend acht.

Sowohl in der ersten Position als auch in der zweiten Position des Betätigungselements 110 sind die Eingriffselemente 112 nicht im Eingriff mit den Zähnen 132 der Zahnräder 130. Falls das Betätigungselement 110 durch einen Schließvorgang eines Fensters oder einer Tür in das Gehäuse 100 hineingedrückt wird, so berühren die Eingriffselemente 112 Zähne 132 der Zahnräder 130, wodurch ein Zahnrad 130 im Uhrzeigersinn und das andere Zahnrad 130 entgegen dem Uhrzeigersinn gedreht wird. Gleichzeitig werden dadurch die Schenkelfedern 150 gespannt, wobei bei der einen Schenkelfeder 150 der Winkel zwischen den Schenkeln kleiner wird und bei der anderen Schenkelfeder 150 der Winkel zwischen den Schenkeln größer wird. Da das Betätigungselement 110 in der zweiten Position nicht mehr mit den Zahnrädern 130 in Eingriff steht, gibt es eine Stelle, an der die Eingriffselemente 112 den Eingriff mit den Zahnräder 130 verlieren.

An dieser Stelle bewirken die gespannten Schenkelfeder 150, dass die gedrehten Zahnräder 130 samt den damit verbundenen Permanentmagneten 140 schnell zurückgedreht werden. Aufgrund der Spannung der Schenkelfedern 150 werden hierbei die Schenkelfedern in die jeweils andere Richtung gespannt, sodass eine Drehschwingung entsteht, welche je nach Größe der vorhandenen Reibung mehr oder weniger stark gedämpft ist. Dies wiederum bewirkt, dass die sich ebenfalls in der Drehschwingung befindlichen Permanentmagneten 140 in die unterhalb der Permanentmagneten 140 angeordneten Spulen 161 für die Zeitdauer der Drehschwingung jeweils Spannungen induzieren.

Falls die Tür oder das Fenster geöffnet wird, wird das Betätigungselement 110 durch die Druckfedern 120 in die erste Position zurück verschoben, wobei wiederum Spannung in die Spulen 161 induziert wird und die Zahnräder in die jeweils entgegengesetzte Richtung gedreht werden.

Der Drehwinkel, um den die Zahnräder 130 schwingen, ist unterschiedlich, beträgt jedoch weniger als 360°. Die Spulen 161 sind PCB-Spulen. Der Drehwinkel, die Anzahl der Pole der Permanentmagneten 140 und die Anzahl der Spulen 161 pro Scheibe 160 ist so gewählt, dass jede magnetische Ausrichtung des Läufers sich mindestens einmal über eine PCB-Spule bewegt.

Bei der Schwingung der Zahnräder 130 entsteht an den Enden der Spulen 161 ein induzierter Spannungspuls, der mit Hilfe eines DC-DC-Wandlers zu einer konstanten Gleichspannung von ca. 3,0 V umgewandelt wird. Die entstehende Energie wird für den Betrieb eines Mikrocontrollers und Funkmodules genutzt. Hierbei wird bei jedem Öffnungs- oder Schließvorgang eine Änderung des Öffnungszustandes der Tür oder des Fensters gefunkt.

Die zweite Ausführungsform der Vorrichtung zur Energiegewinnung ist ebenso wie die erste Ausführungsform in einem Gehäuse 100 angeordnet (Fig. 4). Gemäß dieser Ausführungsform realisieren das Betätigungselement 110 und ein Zahnradelement 135 einen Zahnstangenantrieb. Dies bedeutet, dass bei einer linearen Verschiebung des Betätigungselements 110 das in einer Mitte des Gehäuses 100 angeordnete Zahnradelement 135 um seine Lagerachse rotiert wird. Hierzu weist Betätigungselement 110 eine Zahnstangenbereich 117 auf, welcher mit einem zweiten zusätzlichen Zahnrad gekoppelt ist.

Das Betätigungselement 110 weist zwei parallel verlaufende Stangen 113 auf, welche an einem vom Gehäuse 100 entfernten Ende 114 des Betätigungselements 110 miteinander verbunden sind. Mithilfe von zwei Bohrungen 118, welche in der ersten Seitenwand 101 des Gehäuses 100 angeordnet sind, wird das Betätigungselement 110 entlang einer Richtung von der ersten Seitenwand 101 zur zweiten Seitenwand 102 des Gehäuses 100 geführt. Lediglich eine Stange 113, vorliegend die linke, weist an einem inneren Bereich, welcher zur anderen Stange 113 weist, den Zahnstangenbereich 117 auf.

Das Zahnradelement 135 weist ein erstes zusätzliches Zahnrad 136 sowie ein zweites zusätzliches Zahnrad auf, welches sich angrenzend, z.B. unterhalb, des ersten zusätzlichen Zahnrads 136 befindet. Das erste zusätzliche Zahnrad 136 und das zweite zusätzliche Zahnrad sind einstückig ausgeführt. Der Durchmesser des ersten zusätzlichen Zahnrads 136 ist wesentlich größer als der Durchmesser des zweiten zusätzlichen Zahnrads. Bevorzugt liegt der Durchmesser des ersten zusätzlichen Zahnrads 136 zwischen 20 mm und 24 mm und beträgt besonders bevorzugt 22mm. Bevorzugt liegt der Durchmesser des zweiten zusätzlichen Zahnrads zwischen 5 und 7 mm und beträgt besonders bevorzugt 6 mm. Bevorzugt liegt das Verhältnis des Durchmessers des ersten zusätzlichen Zahnrads 136 und des Durchmessers des zweiten zusätzlichen Zahnrads zwischen 2 und 4 und beträgt besonders bevorzugt 3,5.

Zwischen dem vom Gehäuse 100 entfernten Ende 114 des Betätigungselements 110 und dem Lager des Zahnradelements 135 ist eine Druckfeder 120 angeordnet, sodass sich im geöffneten Zustand des Fensters oder der Tür, in welchem die Feder in einem kraftfreien Zustand ist, der größte Teil des Betätigungselements 110 außerhalb des Gehäuses 100 befindet. Dies entspricht der ersten Position des Betätigungselements 110. In der zweiten Position des Betätigungselements 110, d. h., wenn das Fenster oder die Tür geschlossen ist, ist das Ende 114 des Betätigungselement 110 bündig mit der ersten Seitenwand 101 des Gehäuses 100. In diesem Zustand ist die Druckfeder 120 zusammengedrückt, sodass bei einem erneuten Öffnen des Fensters oder der Tür das Betätigungselement 110 in die erste Position zurückgeschoben wird.

Ferner ist das erste zusätzliche Zahnrad 136 des Zahnradelements 135 an sich gegenüber liegenden Enden des ersten zusätzlichen Zahnrads 136 mit zwei identisch ausgebildeten Zahnrädern 130 gekoppelt. Diese Kopplung bewirkt, dass die beiden Zahnräder 130 dieselbe Drehrichtung aufweisen. Da der Radius des ersten zusätzlichen Zahnrad 136 ca. um den Faktor 3 größer ist als die Radien der Zahnräder 130, drehen sich die beiden Zahnräder 130 dreimal so schnell wie das Zahnradelement 135.

Jedes Zahnrad 130 weist einen Permanentmagneten 140 auf, welcher jeweils sektorförmig auf einer Fläche mit 16 Polen magnetisiert ist. Die Permanentmagneten 140 sind genauso ausgebildet wie in der ersten Ausführungsform der Vorrichtung. Hierbei ist jedes Zahnrad 130 im Wesentlichen scheibenförmig und oberhalb des entsprechenden Permanentmagneten 140 angeordnet, welcher ebenfalls scheibenförmig ist. Im Gegensatz zur ersten Ausführungsform der Vorrichtung ist der Radius des jeweiligen Zahnrads 130 wesentlich kleiner als der Radius der Scheiben des Permanentmagneten 140. Der Durchmesser des Zahnrads 130 liegt bevorzugt zwischen 7 und 9 mm, und beträgt besonders bevorzugt 8 mm. Der Durchmesser einer Scheibe des Permanentmagneten 140 liegt bevorzugt zwischen 16 und 20 mm, und beträgt besonders bevorzugt 18 mm. Somit beträgt das Verhältnis bevorzugt ca. 1:2.

Jedes Zahnrad 130 ist mit dem dazugehörigen Permanentmagneten 140 mittels jeweils eines Freilaufs gekoppelt. Hierbei wirkt der Freilauf bei einem Zahnrad im Uhrzeigersinn blockierend und bei dem anderen Zahnrad entgegen dem Uhrzeigersinn blockierend. Dies bewirkt, dass bei Betätigung des Betätigungselement 110, d. h. falls das Betätigungselement 110 von der ersten Stellung in die zweite Stellung gedrückt wird, bei der vorliegenden Anordnung des Zahnstangenantriebs das Zahnradelement 135 im Uhrzeigersinn und die beiden Zahnräder 130 entgegen dem Uhrzeigersinn gedreht werden.

Aufgrund der Freiläufe kann sich somit nur ein Permanentmagnet 140 mitdrehen. Falls die Tür oder das Fenster geöffnet wird und das Betätigungselement 110 aufgrund der Kraftwirkung der Druckfeder 120 von der zweiten Stellung in die erste Stellung zurückgedrückt wird, drehen sich aufgrund des oben beschriebenen Mechanismus die Zahnräder im Uhrzeigersinn, wobei dieses Mal der andere Permanentmagnet sich mitdreht. Aufgrund der hohen Übersetzung und einer reibungsarmen Lagerung der Permanentmagnete 140 kann somit eine große Menge Strom in die Spulen 161 induziert werden. Hierbei sind die Spulen 161 genauso angeordnet wie in der ersten Ausführungsform. Unterhalb jedes Permanentmagneten 140 ist jeweils eine Scheibe 160 angeordnet, auf welcher jeweils eine Vielzahl von sektorförmig angeordneten Spulen 161 aufgebracht ist. Die Anzahl der Spulen 161 pro Scheibe 160 beträgt vorliegend sieben.

### Bezugszeichenliste

100 Gehäuse
101 erste Seitenwand
102 zweite Seitenwand
110 Betätigungselement
111 Stiel
112 Eingriffselement
113 Stange
114 vom Gehäuse entfernten Ende des Betätigungselements
115 Stab
116 Loch
117 Zahnstangenbereich
118 Bohrungen
120 Druckfeder
130 Zahnrad
132 Zahn
135 Zahnradelement
136 erstes zusätzliches Zahnrad des Zahnradelement
140 Permanentmagnet
150 Schenkelfeder
160 Scheibe, auf der Spulen angeordnet sind
161 Spule

## Patentansprüche

1. Vorrichtung zur Energiegewinnung und zur Verwendung an einer Tür oder einem Fenster, aufweisend:
ein verschiebbares Betätigungselement (110); welches mit der Tür oder dem Fenster koppelbar ist;
ein mit dem Betätigungselement (110) mechanisch gekoppeltes Zahnrad (130), wobei das Zahnrad (130) einen Permanentmagneten aufweist oder mit einem Permanentmagneten gekoppelt ist; und
eine Spule, wobei dem Zahnrad (130) die Spule zugeordnet ist und das Betätigungselement (110) und das Zahnrad (130) derart gekoppelt sind, dass bei einer Verschiebung des Betätigungselements (110) das Zahnrad (130) um eine dem Zahnrad zuordenbare Rotationsachse rotiert; und
wobei bei einer Rotation des Zahnrads (130) um die Rotationsachse in der Spule (161) eine elektrische Spannung induziert wird, sodass eine elektrische Energie gewonnen wird,
und das Zahnrad (130) einen Permanentmagneten (140) aufweist, welcher jeweils sektorförmig auf einer Fläche magnetisiert ist, **dadurch gekennzeichnet, dass**
das Zahnrad (130) jeweils eine Platte oder eine Scheibe (160) mit sektorförmig angeordneten Spulen (161) aufweist, wobei die Platte oder die Scheibe (160) mit dem dazugehörigen Zahnrad (130) koaxial angeordnet ist.

2. Vorrichtung gemäß Anspruch 1, **dadurch gekennzeichnet, dass**
das Betätigungselement (110) mit der Tür oder dem Fenster derart gekoppelt ist, dass
das Betätigungselement (110) in einem geöffneten Zustand der Türe oder des Fensters in einer ersten Position angeordnet ist; und
das Betätigungselement (110) in einem geschlossenen Zustand der Türe oder des Fensters in einer zweiten Position angeordnet ist.

3. Vorrichtung gemäß Anspruch 2, **dadurch gekennzeichnet, dass**
das Betätigungselement (110) in dem geschlossenen Zustand der Türe oder des Fensters gegenüber einer Feder verspannt ist.

4. Vorrichtung gemäß einem der vorangegangenen Ansprüche, **dadurch gekennzeichnet, dass**
die elektrische Spannung verwendet wird, um ein Funkmodul, einen Mikroprozessor, einen Mikrocontroller, einen Gleichrichter, einen DC-DC-Wandler oder ein anderes elektrisches Gerät mit der elektrischen Energie zu versorgen.

5. Vorrichtung gemäß einem der vorangegangenen Ansprüche, **dadurch gekennzeichnet, dass**
das Zahnrad (130) mittels einer Schenkelfeder (150) an einem Gehäuse (100) der Vorrichtung befestigt ist.

6. Vorrichtung gemäß dem vorangegangenen Anspruch, **dadurch gekennzeichnet, dass**
das Betätigungselement (110) ein Eingriffselement (112) aufweist, welches jeweils derart ausgeführt und eingerichtet ist, dass bei einem Verschieben des jeweiligen Betätigungselements (110) von der ersten Position zur zweiten Position oder von der zweiten Position zur ersten Position das jeweilige Eingriffselement (112) in das jeweilige Zahnrad (130) eingreift, das jeweilige Zahnrad (130) rotiert, wodurch die jeweilige Schenkelfeder (150) gespannt wird, bis das jeweilige Eingriffselement (112) nicht mehr in das jeweilige Zahnrad (130) eingreift, woraufhin die jeweilige Schenkelfeder (150) das jeweilige Zahnrad (130) in eine entgegengesetzte Richtung derart bewegt, dass dies zu einer Drehschwingung des jeweiligen Zahnrades (130) führt.

7. Vorrichtung gemäß Anspruch 5 oder 6, **dadurch gekennzeichnet, dass**
ein Drehwinkel der Drehschwingung des jeweiligen Zahnrades (130) zwischen 60° und 360° liegt.

8. Vorrichtung gemäß Anspruch 1 bis 4, ferner aufweisend:
ein Zahnradelement (135) mit einem ersten zusätzlichen Zahnrad (136) und einem zweiten zusätzlichen Zahnrad, **dadurch gekennzeichnet, dass**
das zweite zusätzliche Zahnrad des Zahnradelements (135) und das Zähne (132) aufweisende Betätigungselement (110) derart miteinander gekoppelt sind, dass diese einen Zahnstangenantrieb realisieren,
wobei das erste zusätzliche Zahnrad (136) des Zahnradelements (135) mit dem Zahnrad (130) in Eingriff steht, wobei der Radius des ersten zusätzlichen Zahnrads (136) größer als der Radius des Zahnrades (130) ist.

9. Vorrichtung gemäß einem der vorangegangenen Ansprüche, **dadurch gekennzeichnet, dass**
das Zahnrad (130) genau einen Permanentmagneten (140) aufweist; und
das Zahnrad mit dem zugehörigen Permanentmagneten (140) mittels eines Freilaufs gekoppelt ist.

10. Sensor zur Detektion eines Öffnungs- oder Schließvorganges eines Fensters oder einer Tür, aufweisend eine Vorrichtung nach einem der vorangegangenen Ansprüche, **dadurch gekennzeichnet, dass**
die Vorrichtung eingerichtet und ausgeführt ist, dass die Energie, welche bei einem Betätigen des Betätigungselements (110) gewonnen wird, dazu verwendet wird, ein Funksignal zu erzeugen, welches einen Öffnungs- oder Schließvorgang des Fensters oder der Tür anzeigt.

## Claims

1. Device for harvesting energy and for use on a door or window, comprising:
a displaceable actuation element (110) that can be coupled to the door or the window;
a gear wheel (130) mechanically coupled to the actuation element (110), wherein the gear wheel (130) comprises a permanent magnet, or is coupled to a permanent magnet; and
a coil, wherein the gear wheel (130) is assigned to the coil, and the actuation element (110) and the gear wheel (130) are coupled in such a way that, in a displacement of the actuation element (110), the gear wheel (130) rotates about an axis of rotation that can be assigned to the gear wheel; and
wherein, in a rotation of the gear wheel (130) about the axis of rotation, an electric voltage is induced in the coil (161), so that electrical energy is harvested,
and the gear wheel (130) comprises a permanent magnet (140), which is magnetised in sectors on a surface in each case, **characterised in that**
the gear wheel (130) in each case comprises a plate or a disc (160) with coils (161) arranged in sectors, wherein the plate or the disc (160) is arranged coaxially with the associated gear wheel (130).

2. Device according to claim 1, **characterised in that**
the actuation element (110) is coupled to the door or the window in such a way that
the actuation element (110) is arranged, in a first position, in an open state of the door or the window; and
the actuation element (110) is arranged, in a second position, in a closed state of the door or the window.

3. Device according to claim 2, **characterised in that**
the actuation element (110) is tensioned relative to a spring in the closed state of the door or the window.

4. Device according to any one of the preceding claims, **characterised in that**
the electrical voltage is used to supply a radio module, a microprocessor, a microcontroller, a rectifier, a DC-DC converter or another electrical device with electrical energy.

5. Device according to any one of the preceding claims, **characterised in that**
the gear wheel (130) is fastened to a housing (100) of the device by means of a torsion spring (150).

6. Device according to the preceding claim, **characterised in that**
the actuation element (110) comprises an engagement element (112), which is in each case designed and configured in such a way that, in a displacement of the respective actuation element (110) from the first position to the second position, or from the second position to the first position, the respective engagement element (112) engages in the respective gear wheel (130), rotates the respective gear wheel (130), whereby the respective torsion spring (150) is tensioned until the respective engagement element (112) no longer engages in the respective gear wheel (130), whereupon the respective torsions spring (150) moves the respective gear wheel (130) in an opposite direction in such a way that this leads to a torsional vibration of the respective gear wheel (130).

7. Device according to claim 5 or 6, **characterised in that**
an angle of rotation of the torsional vibration of the respective gear wheel (130) lies between 60° and 360°.

8. Device according to claim 1 to 4, further comprising:
a gear wheel element (135) with a first additional gear wheel (136) and a second additional gear wheel, **characterised in that**
the second additional gear wheel of the gear wheel element (135) and the actuation element (110) comprising teeth (132) are coupled to one another in such a way that they form a rack and pinion drive,
wherein the first addition gear wheel (136) of the gear wheel element (135) is in engagement with the gear wheel (130), wherein the radius of the first additional gear wheel (136) is larger than the radius of the gear wheel (130).

9. Device according to any one of the preceding claims, **characterised in that**
the gear wheel (130) comprises exactly one permanent magnet (140); and
the gear wheel is coupled to the associated permanent magnet (140) by means of a free-wheel.

10. Sensor for detecting an opening or closing operation of a window or a door, comprising a device according to any one of the preceding claims, **characterised in that**
the device is configured and designed so that the energy that is harvested upon an actuation of the actuation element (110) is used to generate a radio signal, which indicates an opening or closing operation of the window or the door.

## Revendications

1. Dispositif de récupération d'énergie et destiné à être utilisé sur une porte ou une fenêtre, présentant :
un élément d'actionnement (110) déplaçable, lequel peut être couplé à la porte ou à la fenêtre ;
une roue dentée (130) couplée mécaniquement à l'élément d'actionnement (110), dans lequel la roue dentée (130) présente un aimant permanent ou est couplée à un aimant permanent ; et
une bobine, dans lequel la bobine est associée à la roue dentée (130) et l'élément d'actionnement (110) et la roue dentée (130) sont couplés de telle manière que lors d'un coulissement de l'élément d'actionnement (110), la roue dentée (130) tourne autour d'un axe de rotation pouvant être associé à la roue dentée ; et
dans lequel lors d'une rotation de la roue dentée (130) autour de l'axe de rotation, une tension électrique est induite dans la bobine (161) si bien qu'une énergie électrique est récupérée,
et la roue dentée (130) présente un aimant permanent (140), lequel est magnétisé sur une surface respectivement en forme de secteur, **caractérisé en ce que**
la roue dentée (130) présente respectivement une plaque ou un disque (160) avec des bobines (161) disposées en forme de secteur, dans lequel la plaque ou le disque (160) est disposé de manière coaxiale avec la roue dentée (130) associée.

2. Dispositif selon la revendication 1, **caractérisé en ce que**
l'élément d'actionnement (110) est couplé de telle manière à la porte ou à la fenêtre que
l'élément d'actionnement (110) est disposé dans une première position dans un état ouvert de la porte ou de la fenêtre ; et
l'élément d'actionnement (110) est disposé dans une deuxième position dans un état fermé de la porte ou de la fenêtre.

3. Dispositif selon la revendication 2, **caractérisé en ce que**
l'élément d'actionnement (110) est serré par rapport à un ressort dans l'état fermé de la porte ou de la fenêtre.

4. Dispositif selon l'une quelconque des revendications précédentes,
**caractérisé en ce que**
la tension électrique est utilisée pour alimenter en l'énergie électrique un module radio, un microprocesseur, un microcontrôleur, un redresseur, un convertisseur CC-CC ou un autre appareil électrique.

5. Dispositif selon l'une quelconque des revendications précédentes, **caractérisé en ce que**
la roue dentée (130) est fixée sur un boîtier (100) du dispositif au moyen d'un ressort à branches (150).

6. Dispositif selon la revendication précédente, **caractérisé en ce que**
l'élément d'actionnement (110) présente un élément de prise (112), lequel est réalisé et est configuré respectivement de telle manière que lors d'un coulissement de l'élément d'actionnement (110) respectif depuis la première position vers la deuxième position ou depuis la deuxième position vers la première position, l'élément de prise (112) respectif vient en prise avec la roue dentée (130) respective, la roue dentée (130) respective tourne, ce qui a pour effet de tendre le ressort à branches (150) respectif jusqu'à ce que l'élément de prise (112) respectif ne vienne plus en prise avec la roue dentée (130) respective pour qu'ensuite le ressort à branches (150) respectif déplace la roue dentée (130) respective dans une direction opposée de telle manière que ceci donne lieu à une vibration rotative de la roue dentée (130) respective.

7. Dispositif selon la revendication 5 ou 6, **caractérisé en ce qu'**
un angle de rotation de la vibration rotative de la roue dentée (130) respective se situe entre 60° et 360°.

8. Dispositif selon la revendication 1 à 4, présentant en outre :
un élément de roue dentée (135) avec une première roue dentée (136) supplémentaire et une deuxième roue dentée supplémentaire,
**caractérisé en ce que**
la deuxième roue dentée supplémentaire de l'élément de roue dentée (135) et l'élément d'actionnement (110) présentant des dents (132) sont couplées l'un à l'autre de telle manière que ceux-ci réalisent un entraînement à crémaillère,
dans lequel la première roue dentée (136) supplémentaire de l'élément de roue dentée (135) est en prise avec la roue dentée (130), dans lequel le rayon de la première roue dentée (136) supplémentaire est supérieur au rayon de la roue dentée (130) .

9. Dispositif selon l'une quelconque des revendications précédentes, **caractérisé en ce que**
la roue dentée (130) présente précisément un aimant permanent (140) ; et
la roue dentée est couplée à l'aimant permanent (140) associé au moyen d'une roue libre.

10. Capteur de détection d'une opération d'ouverture ou de fermeture d'une fenêtre ou d'une porte, présentant un dispositif selon l'une quelconque des revendications précédentes, **caractérisé en ce que**
le dispositif est configuré et est réalisé pour que l'énergie, laquelle est récupérée lors d'un actionnement de l'élément d'actionnement (110), soit utilisée pour générer un signal radial, lequel indique une opération d'ouverture ou de fermeture de la fenêtre ou de la porte.
